Europäisches Patentamt

European Patent Office

Office européen des brevets

(11) Publication number : **0 391 568 B1**

(12) **EUROPEAN PATENT SPECIFICATION**

(45) Date of publication of patent specification :
**11.05.94 Bulletin 94/19**

(51) Int. Cl.⁵ : **C09D 127/18,** C08L 27/18,
C08L 79/08, C08L 81/06,
B32B 27/28, C09D 127/20

(21) Application number : 90302983.3

(22) Date of filing : 20.03.90

(54) **Polymeric tetrafluoroethylene compositions and articles, and processes for preparing said compositions.**

(30) Priority : **29.03.89 GB 8907088**

(43) Date of publication of application :
**10.10.90 Bulletin 90/41**

(45) Publication of the grant of the patent :
**11.05.94 Bulletin 94/19**

(84) Designated Contracting States :
**AT BE CH DE DK ES FR GB GR IT LI LU NL SE**

(56) References cited :
**EP-A- 0 100 889
EP-A- 0 159 767
EP-A- 0 301 543
US-A- 4 655 944
US-A- 4 703 076**

(72) Inventor : **MacSween, John
29 Lubnaig Road Newlands
Glasgow G42 2RY Scotland (GB)**
Inventor : **Barker, Brian
Craigie, Dundee
Tayside DD4 7TP Scotland (GB)**
Inventor : **Gellan, Andrea
9 Transy Grove Dunfermline
Fife, Scotland (GB)**
Inventor : **Olsson, Stellan
Dr. Fitz Strasse 10
9932 Weissenburg (DE)**
Inventor : **Watson, David
5 Bramley Way Whittington, Lichfield
Staffordshire WS14 9SB (GB)**

(74) Representative : **McCallum, William Potter et al
Cruikshank & Fairweather 19 Royal Exchange
Square
Glasgow G1 3AE Scotland (GB)**

(73) Proprietor : **W.L. GORE & ASSOCIATES (UK)
LTD
1 Bell Yard
London WC2A 2JP (GB)**

## Description

This invention relates to polymeric tetrafluoroethylene compositions, to processes for making them, to layered reinforced polymeric tetrafluoroethylene articles, and to particular applications of the layered articles.

The use of fluorocarbon polymer coatings for covering surfaces of objects or for impregnating objects is known. The good heat resistance of tetrafluoroethylene polymers combined with their resistance to solvent attack and their inertness to attack by most chemical agents makes such polymers useful as coatings or impregnants in a wide variety of applications.

Fluoropolymer compositions for spray coating are described in United Kingdom Patent 2,051,091. These compositions utilize the so-called paste extrudable, dispersion-type polytetrafluoroethylene (PTFE) resin, which, as described at page 812 of Kirk-Othmer Encyclopedia of Chemical Technology, volume 9, 2nd Ed., Interscience Publishers, Inc., MY, 1966, is virtually a chemically distinct species from the so-called granular class of PTFE resin. In fact, U.K. Patent 2,051,091, at page 1, page 116 and page 2, lines 32-34, specifically states that paste extrudable "PTFE dispersion powders" are required. The patent, in addition, also states at page 1, line 118-119, that "PFA-powder" can be present and that some granular PTFE can be used as a reinforcing additive (page 2, lines 90-93). "PFA powder" as used therein refers to thermoplastic copolymers of tetrafluoroethylene and perfluoropropyl vinyl ethers (TFE/PPVE) where the content of PPVE and molecular weight of the copolymer are such that normally non-thermoplastic homopolymer PTFE is made thermoplastic. While this patent states that its spray coatings can surround a reinforcing mat, the mat is pressed into a coating already applied to a substrate. The sole substrate class described in the patent is a hard metallic substrate or a glass substrate. It would be desirable to provide a thermoplastic tetrafluoroethylene polymeric composition for us in providing a spray coating that can be used to coat flexible substrates.

U.S. Patent 3,981,945 describes coating compositions of a fluorocarbon polymer and aromatic polysulfones, such as polyethersulfones. But there is no specific disclosure of thermoplastic tetrafluoroethylene copolymers, and all the examples are directed to use of homopolymer polytetrafluoroethylene, which is nonthermoplastic. Furthermore, examination of Example 5 of the patent and a comparison of it with the other Examples indicates that the aromatic polysulfones are present to improve adherence of the PTFE monopolymer to a hard nonporous substrate. It would be desirable to provide a thermoplastic tetrafluoroethylene polymeric composition for other uses.

European patent application 0301543 discloses mixtures of PFA copolymer and polyimide, where the ratio of PFA to polyimide is in the range 1:1 to 1:20 (i.e. the PFA content is 50% at most).

It is particularly desirable to provide a thermoplastic tetrafluoroethylene composition for use in making free standing laminated articles of tetrafluoroethylene.

The composition may be in the form of a sprayable coating composition or an extrudable coating composition.

The mixture may be present in a compatible organic solvent, such as methylene chloride, or as a dispersion in water to provide a sprayable composition. Alternatively the mixture may be in the form of a powder suitable for extrusion processing, such as in the extrusion coating of electrical wire.

The invention also provides a process for preparing the composition which comprises:

(a) dissolving an aromatic polyether imide in an organic solvent compatible therewith;

(b) mixing in a thermoplastic copolymer of tetrafluoroethylene and perfluoro(propylvinylether) until the content of the thermoplastic copolymer is from 60 to 91 percent by weight of the total weight of the copolymer and the polyether imide;

(c) either driving off the organic solvent to leave an extrudable powder mixture, or driving off the organic solvent and dispersing the copolymer mixture in water.

The invention further provides layered composites comprising:

(a) a base first layer of a fluoropolymer composition,

(b) a second layer which is a reinforcing material, and

(c) a third layer of a fluoropolymer composition; said fluoropolymer composition of each of said first and third layers comprising a mixture of a thermoplastic copolymer of tetrafluoroethylene and perfluoro (propylvinylether) and an aromatic polyether imide , the thermoplastic copolymer constituting from 60 to 91% by weight of the combined weight of the copolymer and the polyether imide; the copolymer and the polyetherimide having been uniformly mixed by dissolving the polyetherimide in an organic solvent to form a solution thereof, mixing the solution with copolymer in particle form until uniformly mixed, and driving off the solvent.

The reinforcing material may be a fibrous material or unsintered polytetrafluoroethylene tape.

The invention will now be described with reference to a number of examples and to the accompanying drawings in which:-

Figure 1 is a perspective view of a three layer laminate in accordance with the invention,

Figures 2,3 and 4 are perspective views of various pipe laminates in accordance with the invention.

The coating composition of the invention comprises a mixture of 60-91 weight percent of a thermoplastic copolymer of tetrafluoroethylene and perfluoro (propylvinyl ether) and, complementally, 40-9 weight percent of amorphous thermoplastic polyether imide (which may be referred to hereinafter as "polyether"). The thermoplastic copolymer is sometimes referred to herein as "TFE/PPVE" copolymer; the perfluoro(propylvinyl ether) is sometimes referred to as PPVE. Preferred ranges of amounts in the mixture are 60-80% TFE/PPVE copolymer and 40-20% polyether. Presence of the thermoplastic copolymer provides the usual heat and chemical resistivity of fluoropolymers to the coating produced from the composition, while presence of the polyethers provides rigidity and stiffness to the coating.

TFE/PPVE copolymers are available commercially. E.I. duPont de Nemours manufactures two grades, called Teflon (registered trade mark) PFA, a 340 and a 350 grade. The higher molecular weight grade is preferred.

To prepare the coating compositions of the invention, the polyether is dissolved in an organic solvent compatible with the polyether such as methylene chloride, dimethyl formamide, N-methyl pyrrolidone, 1,1,2-trichloroethylene, tetrahydrofuran, or the like. The TFE/PPVE is then stirred in while agitating the solution. The mixture is preferably tumbled, and the solvent is then driven off, usually by heating. The resulting mixture can then be used as an extrudable composition or it can be dispersed in water for use as a spray coating composition.

Fillers may be added to the aqueous dispersion to impart specific properties to the coating. For example, as will be elaborated on further below, one use of the layered composite of the invention is as a pipe or hose, especially piping in aircraft fuel lines. When so used, it is necessary for the piping to be conductive in order to dissipate static electricity. It is beneficial, then, in such an end use to add carbon black to the dispersion in order to provide a carbon-black filled conductive coating. Pigments may be added for coloring. Other additives may be added as specific end uses come to mind to one skilled in the art.

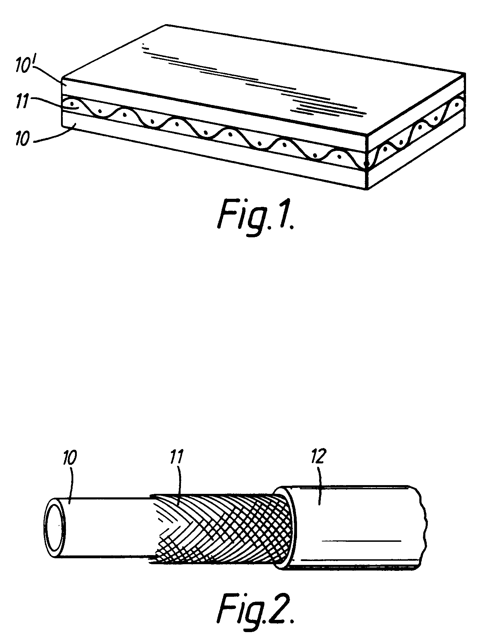

The layered compositions of the invention can be used to provide a reinforced polymeric tetrafluoroethylene article. Figure 1 represents the layered composite in its simplest form. In Figure 1, 10 represents the base layer of fluoropolymer composition, 11 represents the second layer of reinforcing material laid down on the base layer. 10' represents the third layer, which is composed of the fluoropolymer composition.

The fluoropolymer compositions that may form the base layer and the third layer have been described above. The particular fluoropolymer composition used can be the same or different for each layer.

The reinforcing material is preferably a fibrous material and can be a woven or non-woven material, a mesh, or the like. It can be in the form of a fabric, a filament winding, chopped strands, a mat, a roving, or the like. Because a number of end uses of the layered composites require that the composites be in the form of a pipe in which the base layer is the interior surface of the pipe, and because such end uses require that sections of pipe be bonded together, it is convenient to join sections simply by heating the thermoplastic fluoropolymer and melt bonding sections. However, to maintain the integrity of the reinforcing layer composition, it is preferable that the fibrous reinforcing material be composed of fibres that have a melting point above the melting point of the thermoplastic fluoropolymers used in fluoropolymer compositions. Such fibrous materials include polyimide fibres such as those known as Kevlar (registered trade mark) polyimide fibres, heat-resistant glass fibres, polytetrafluoroethylene homopolymer fibres, (especially PTFE fibres made of microporous expanded PTFE), polyether ether ketones and the like. The fibrous materials can also include carbon fibres, aluminium silicate fibres and other inorganic fibres.

Alternatively, the reinforcing material may be unsintered polytetrafluoroethylene tape. Such tape, made from tetrafluoroethylene homopolymer is available commercially.

In a preferred embodiment, the layered composite is in the form of a pipe or tube in which the layers comprise coaxial layers with the base layer forming the interior of the pipe. The pipe is most conveniently made by spraying the base layer fluoropolymer composition on a mandrel, or cylindrical former, made usually of stainless steel and being preferably between 1 and 3 inches in diameter. As illustrated in Figure 2 which depicts a layered pipe composite, the pipe comprises a base layer 10 of fluoropolymer composition. Once the base layer 10 has been sprayed on to the cylindrical mandrel, fibrous reinforcing material 11 is applied. To make a pipe construction, it is convenient to simply wrap a woven or non-woven fibrous material around the mandrel, or to simply wind a filament or yarn around the coated mandrel, as shown in the cutaway section of Figure 2. Alternatively, unsintered PTFE tape may be used instead. As a third layer, additional fluoropolymer composition 12 is sprayed on to the reinforcing material 11.

At this point, the layered pipe composite can be removed from the mandrel, if desired. It is a flexible assembly suitable for use as piping or conduit for electrical wiring.

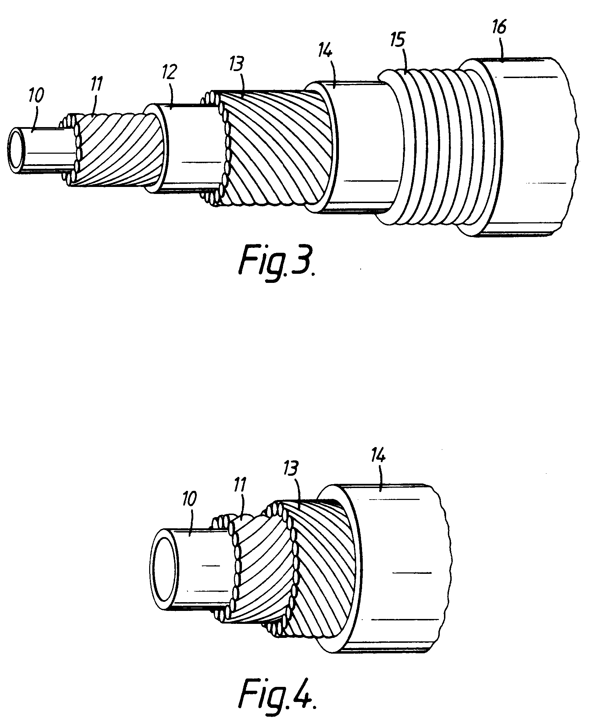

To make a stronger, stiffer but still flexible pipe, additional layers of fluoropolymer material and reinforcing

3

material can be added. The order of addition is not critical. However, when the pipe will be used to transport fluids, especially pulsing fluids, it is desirable to use a yarn or filament as layer 11 and to wind it at an angle to the longitudinal axis of the pipe, as shown in Figure 3. An angle of about 54° to the longitudinal has been found preferable. This structure is shown in Figures 3 and 4. Once the first layer of fibrous material is laid on, two variations for additional layers are shown in Figures 3 and 4. In Figure 3, after yarn or filament 11 is wound on, fluoropolymer coat 12 is sprayed on, and then to provide strength against pulsing fluids, yarn or filament 13 is wound on in the opposite direction from winding 11. Preferably the direction of winding of 13 is about 90° from the direction of winding of 11. In Figure 4, an alternative is seen in that counterwind 13 is laid on right after winding 11, without an intervening spray coat of the fluoropolymer composition. After winding 13 is laid on, spray coat fluoropolymer composition 14 is sprayed on. Figure 4 is broken off at this point, but any sequence of layers may continue if desired. In Figure 3, after fluoropolymer coat 14 is applied, a layer of glass roving 15 is wound on to provide increased rigidity, the roving being applied at an angle of nearly 90° from the longitudinal axis of the pipe. Finally, Figure 3 depicts a final coat of the fluoropolymer composition denoted as 16.

A preferred fibrous reinforcing material is yarn or filament made of expanded microporous polytetrafluoroethylene because it provides light-weight, yet unusually strong, reinforcing properties to the layered composite.

Once the finished pipe has been removed from the mandrel, it can be stabilized by subjecting it to heat, e.g. 150°-260°C.

One embodiment of the layered pipe composition finds use in fuel systems and electrical conduit systems of aircraft. The advantages of using PTFE assemblies in aircraft are well known. PTFE liners provide chemical resistance and good high temperature performance. However, PTFE liners must be sufficiently thick to avoid collapse from negative pressure, and the thickness hinders freedom of movement. The piping embodiment of the present invention provides fluoropolymer composition coatings thin enough to permit flexibility of the piping, particularly the flexing incurred in aircraft wings. Moreover, airframes of aircraft do not use nearly as much metal as heretofore, so that a fuel system made of metal piping acts as a lightning conductor and could be the cause of severe damage to, or destruction of, an aircraft in the event of a lightning strike. The same applies to metallic electrical conduits, especially when they run through fuel tanks. A degree of conductivity is necessary, however, to allow static electric charges to be dissipated. The piping composites described herein are particularly suited for such use in aircraft when the fluoropolymer composition layers contain carbon black to provide a degree of conductivity to dissipate static electricity. Being thermoplastic, the fluoropolymer layers can be bent in installation to fit particular aircraft configurations.

EXAMPLES

Example I

This example illustrates preparation of an extrudable coating composition in accordance with the invention.

200 gms of polyether imide (PEI) powder (Ultem 1000) was dissolved in one litre of methylene chloride and the solution added slowly over a period of 15 minutes to 2.0 kilograms of TFE/PPVE copolymer powder (Teflon PFA 350) of maximum particle size 180 microns in a suitable mixer. The mixer was run for a further 15 minutes after the addition of the solution, during which time the mixer was heated to 75°C to accelerate the evaporation of methylene chloride.

At the end of the mixing cycle the blend was removed from the mixer and dried for eight hours at 120°C. The material was then thermoplastically extruded onto 22 AWG silver plated copper wire to give a 0.25 mm thick coating of insulation. Dynamic cut-through, abrasion resistance and fluid resistance properties of the coated wire were measured in accordance with BS G 230, and the results are given in Table 1.

Comparison example (compared with Example 1)

2.0 kg of TFE/PPVE copolymer (Teflon PFA 350) powder of maximum particle size 180 microns was blended with 200 gm of PEI powder (Ultem 1000) of maximum particle size 180 microns in a high speed powder blender (Fielder blender) for thirty minutes. The resultant blend was dried for eight hours at 120°C to remove moisture and then thermoplastically extruded onto 22 AWG silver plated copper wire to give a 0.25 mm thick coating of insulation. The dynamic cut-through, abrasion resistance and fluid resistance properties of the coated wire were measured in accordance with BS G 230, and the results are given in Table 1.

In the following Table 1, the results obtained from Example 1 and its comparison example are also compared with results obtained from a wire insulated with virgin TFE/PPVE copolymer (Teflon PFA 350).

EP 0 391 568 B1

## Table 1

| | Dynamic Cut Through Load (N) | Scrape Abrasion Resistance (Cycles to Failure) | Fluid Resistance |
|---|---|---|---|
| Example 1 | 78.1 | 370 | Pass |
| Comparison Example | 40.0 | 41 | Fail |
| Virgin PFA | 40.0 | 50 | Pass |

## Claims

1. A composition comprising a mixture of a thermoplastic copolymer of tetrafluoroethylene and perfluoro(propylvinylether), and an amorphous thermoplastic polyether imide, the thermoplastic copolymer constituting from 60 to 91% by weight of the combined weight of the copolymer and the amorphous polyether imide; the copolymer and the polyetherimide having been uniformly mixed by dissolving the polyetherimide in an organic solvent to form a solution thereof, mixing the solution with copolymer in particle form until uniformly mixed, and driving off the solvent.

2. A composition according to claim 1 wherein the thermoplastic copolymer constitutes 60 to 80% of the composition.

3. A composition according to claim 1 or claim 2 including an organic solvent in which the components of the mixture are soluble.

4. A composition according to claim 1 or claim 2 wherein the mixture is dispersed in water.

5. A composition according to claim 1 or claim 2 wherein the mixture is in the form of a powder.

6. A process for preparing a composition according to claim 4 which comprises:
   (a) dissolving an aromatic polyether imide in an organic solvent compatible therewith;
   (b) mixing in a thermoplastic copolymer of tetrafluoroethylene and perfluoro(propylvinylether) until the content of the thermoplastic copolymer is from 60 to 91 percent by weight of the total weight of the copolymer and the polyether imide;
   (c) driving off the organic solvent; and,
   (d) dispersing the copolymer mixture in water.

7. A process for preparing a composition according to claim 5 which comprises:
   (a) dissolving an aromatic polyether imide in an organic solvent compatible with said polymer;
   (b) mixing in a thermoplastic copolymer of tetrafluoroethylene and perfluoro(propylvinylether) until the content of the thermoplastic copolymer is from 60 to 91 percent by weight of the total weight of the copolymer and the polyether imide; and,

5

EP 0 391 568 B1

(c) driving off the organic solvent to leave an extrudable powder mixture.

8. A process according to claim 6 or claim 7 wherein the organic solvent is methylene chloride.

9. A layered composite comprising:
   (a) a base first layer (10) of a fluoropolymer composition,
   (b) a second layer (11) of a reinforcing material; and
   (c) a third layer (10';12) of a fluoropolymer composition; said fluoropolymer composition of each of said first and third layers comprising a mixture of a thermoplastic copolymer of tetrafluoroethylene and perfluoro (propylvinylether) and an aromatic polyether imide , the thermoplastic copolymer constituting from 60 to 91% by weight of the combined weight of the copolymer and the polyether imide; the copolymer and the polyetherimide having been uniformly mixed by dissolving the polyetherimide in an organic solvent to form a solution thereof, mixing the solution with copolymer in particle form until uniformly mixed, and driving off the solvent.

10. A layered composite according to claim 9 wherein the reinforcing material (11) is a fibrous material.

11. A layered composite according to claim 9 wherein the reinforcing material (11) is unsintered polytetrafluoroethylene tape.

12. A layered composite according to any one of claims 9 to 11 wherein a fourth layer (13) of fibrous reinforcing material is present.

13. A layered composite according to claim 12 wherein a fifth layer (14) of said fluoropolymer composition is present.

14. A layered composite according to claim 13 wherein a sixth layer (15) of fibrous reinforcing material is present.

15. A layered composite according to claim 14 wherein a seventh layer (16) of said fluoropolymer composition is present.

16. A layered composite according to any one of claims 9 to 15 wherein the composite is in the form of a tube.


**Patentansprüche**

1. Eine Zusammensetzung, welche aufweist:
   eine Mischung aus einem thermoplastischen Copolymer von Tetrafluorethylen und Perfluor (Propylvinylether) und einem amorphen thermoplastischen Polyetherimid, wobei das thermoplastische Copolymer 60 bis 91 Gew.-% des gemeinsamen Gewichtes des Copolymers und des amorphen Polyetherimids bildet; wobei das Copolymer und das Polyetherimid dadurch gleichförmig gemischt worden sind, daß das Polyetherimid in einem organischen Lösungsmittel, um von ihm eine Lösung zu bilden, aufgelöst wird, die Lösung mit dem Copolymer in Teilchenform gemischt wird, bis eine gleichförmige Mischung entsteht, und das Lösungsmittel abdestilliert wird.

2. Eine Zusammensetzung gemäß Anspruch 1, bei welcher das thermoplastische Copolymer 60 bis 80 % der Zusammensetzung bildet.

3. Eine Zusammensetzung nach Anspruch 1 oder Anspruch 2, welche ein organisches Lösungsmittel aufweist, in welchem die Komponenten der Mischung lösbar sind.

4. Eine Zusammensetzung nach Anspruch 1 oder Anspruch 2, bei welcher die Mischung in Wasser dispergiert wird.

5. Eine Zusammensetzung nach Anspruch 1 oder Anspruch 2, bei welcher die Mischung in der Form eines Pulvers vorliegt.

6. Ein Verfahren zum Herstellen einer Zusammensetzung gemäß Anspruch 4, umfassend:
   (a) Auflösen eines aromatischen Polyetherimids in einem mit diesem verträglichen organischen Lösungsmittel;

(b) Mischen in einem thermoplastischen Copolymer von Tetrafluorethylen und Perfluor(propylvinylether), bis der Gehalt an thermoplastischem Copolymer 60 bis 91 Gew.-% des Gesamtgewichtes des Copolymers und des Polyetherimids beträgt;

(c) Abdestillieren des organischen Lösungsmittels; und

(d) Dispergieren der Copolymer-Mischung in Wasser.

7. Ein Verfahren zum Herstellen einer Zusammensetzung gemäß Anspruch 5, umfassend:

(a) Auflösen eines aromatischen Polyetherimids in einem mit dem genannten Polymer verträglichen organischen Lösungsmittel;

(b) Mischen in einem thermoplastischen Copolymer von Tetrafluorethylen und Perfluor(propylvinylether), bis der Gehalt an dem thermoplastischen Copolymer 60 bis 91 Gew.-% des Gesamtgewichtes des Copolymers und des Polyetherimids beträgt; und

(c) Abdestillieren des organischen Lösungsmittels, um eine extrudierbare Pulvermischung übrigzulassen.

8. Ein Verfahren nach Anspruch 6 oder Anspruch 7, bei welchem das organische Lösungsmittel Methylenchlorid(Dichlormethan) ist.

9. Ein Schichten-Verbund, aufweisend:

(a) eine als Basis dienende, erste Schicht (10) aus einer Fluorpolymer-Zusammensetzung;

(b) eine zweite Schicht (11) aus einem Verstärkungsmaterial; und

(c) eine dritte Schichte (10'; 12) aus einer Fluorpolymer-Zusammensetzung; wobei die Fluorpolymer-Zusammensetzung einer jeden der genannten ersten und dritten Schichten eine Mischung aus einem thermoplastischen Copolymer von Tetrafluorethylen und Perfluor(propylvinylether) und einem aromatischen Polyetherimid aufweist, und wobei das thermoplastische Copolymer 60 bis 91 Gew.-% des gemeinsamen Gewichtes des Copolymers und des Polyetherimids bildet; und wobei das Copolymer und das Polyetherimid dadurch gleichförmig gemischt worden sind, daß das Polyetherimid in einem organischen Lösungsmittel, um von ihm eine Lösung zu bilden, aufgelöst wird, die Lösung mit dem Copolymer in Teilchenform gemischt wird, bis eine gleichförmige Mischung erzielt ist, und das Lösungsmittel abdestilliert wird.

10. Ein Schichten-Verbund gemäß Anspruch 9, bei welchem das Verstärkungsmaterial (11) ein faseriges Material ist.

11. Ein Schichten-Verbund gemäß Anspruch 9, bei welchem das Verstärkungsmaterial (11) ein Band aus einem ungesinterten Polytetrafluorethylen ist.

12. Ein Schichten-Verbund gemäß einem der Ansprüche 9 bis 11, bei welchem eine vierte Schicht (13) aus faserigem Verstärkungsmaterial vorhanden ist.

13. Ein Schichten-Verbund gemäß Anspruch 12, bei welchem eine fünfte Schicht (14) aus der genannten Fluorpolymer-Zusammensetzung vorhanden ist.

14. Ein Schichten-Verbund gemäß Anspruch 13, bei welchem eine sechste Schicht (15) aus faserigem Verstarkungsmaterial vorhanden ist.

15. Ein Schichten-Verbund gemäß Anspruch 14, bei welchem eine siebente Schicht (16) aus der genannten Fluorpolymer-Zusammensetzung vorhanden ist.

16. Ein Schichten-Verbund gemäß einem der Ansprüche 9 bis 15, bei welchem der Verbund die Form eines Rohres aufweist.

**Revendications**

1. Une composition contenant un mélange d'un copolymère thermoplastique de tétrafluoroéthylène et de perfluoro(propylvinyléther), et un polyétherimide thermoplastique amorphe, le copolymère thermoplastique constituant 60 à 91 % en masse du poids combinés du copolymère et du polyétherimide amorphe ;

le copolymère et le polyétherimide ayant été mélangés uniformément par dissolution du polyétherimide dans un solvant organique pour former une solution de celui-ci, par mélange de la solution avec du copolymère sous forme de particules jusqu'à obtention d'un mélange homogène, et par enlèvement du solvant.

2. Une composition selon la Revendication 1, dans laquelle le copolymère thermoplastique constitue 60 à 80 % de la composition.

3. Une composition selon la Revendication 1 ou 2, contenant un solvant organique dans lequel les composants du mélange sont solubles.

4. Une composition selon la Revendication 1 ou 2, dans laquelle le mélange est dispersé dans de l'eau.

5. Une composition selon la Revendication 1 ou 2, dans laquelle le mélange se présente sous forme d'une poudre.

6. Un procédé de préparation d'une composition selon la Revendication 4, comprenant :
   (a) la dissolution d'un polyétherimide aromatique dans un solvant organique compatible avec celui-ci;
   (b) le mélange dans un copolymère thermoplastique de tétrafluoroéthylène et de perfluoro(propylvinyléther) jusqu'à ce que la proportion de copolymère thermoplastique se situe entre 60 et 91 pourcents en masse du poids total du copolymère et du polyétherimide ;
   (c) le fait de chasser le solvant organique ; et,
   (d) la dispersion du mélange copolymère dans de l'eau.

7. Un procédé de préparation d'une composition selon la Revendication 5, comprenant:
   (a) la dissolution d'un polyétherimide aromatique dans un solvant organique compatible avec ledit polymère;
   (b) le mélange dans un copolymère thermoplastique de tétrafluoroéthylène et de perfluoro(propylvinyléther) jusqu'à ce que la proportion du copolymère thermoplastique se situe entre 60 et 91 pourcents en niasse du poids total du copolymère et du polyétherimide;
   (c) le fait de chasser le solvant organique pour obtenir un mélange de poudre extrudable.

8. Un procédé selon la Revendication 6 ou 7, dans lequel le solvant organique est du chlorure de méthylène.

9. Un composite stratifié comprenant:
   (a) une première couche de base (10) d'une composition à base de fluoropolymère,
   (b) une seconde couche (11) d'un matériau de renforcement ; et
   (c) une troisième couche (10' ; 12) d'une composition à base de fluoropolymère, ladite composition à base de fluoropolymère de chacune desdites première et troisième couches contenant un mélange d'un copolymère thermoplastique de tétrafluoroéthylène et de perfluoro(propylvinyléther) et d'un polyétherimide aromatique, le copolymère thermoplastique constituant entre 60 et 91 % en masse des poids combinés du copolymère et du polyétherimide, le copolymère et le polyétherimide ayant été mélangés uniformément par dissolution du polyétherimide dans un solvant organique pour former une solution de celui-ci, par mélange de la solution avec du copolymère sous forme de particules jusqu'à obtention d'un mélange homogène, et par enlèvement du solvant.

10. Un composite stratifié selon la Revendication 9, dans lequel le matériau de renforcement (11) est un matériau fibreux.

11. Un composite stratifié selon la Revendication 9, dans lequel le matériau de renforcement (11) est une bande de polytétrafluoroéthylène non fritté.

12. Un composite stratifié selon l'une quelconque des Revendications 9 à 11, dans lequel est présente une quatrième couche (13) de matériau de renforcement fibreux.

13. Un composite stratifié selon la Revendication 12, dans lequel est présente une cinquième couche (14) de ladite composition à base de fluoropolymère.

14. Un composite stratifié selon la Revendication 13, dans lequel est présente une sixième couche (15) de matériau de renforcement fibreux.

**15.** Un composite stratifié selon la Revendication 14, dans lequel est présente une septième couche (16) de ladite composition à base de fluoropolymère.

**16.** Un composite stratifié selon l'une quelconque des Revendications 9 à 15, dans lequel le composite se présente sous forme d'un tube.

Fig.1.

Fig.2.

Fig.3.

Fig.4.